# FASCICULE DE BREVET EUROPEEN

(11) **EP 0 684 171 B1**
(45) Date de publication et mention de la délivrance du brevet: **15.04.1998**
(21) Numéro de dépôt: 95107824.5
(22) Date de dépôt: 23.05.1995
(51) Int. Cl.: B60S 1/38, B60S 1/52

(54) **Essuie-glace équipé d'une rampe de lave-glace pour véhicule automobile**
Mit einer Scheibenwaschschiene versehener Scheibenwischer für Kraftfahrzeuge
Windscreen wiper provided with a windscreen washer strip for motor vehicles

(30) Priorité: 26.05.1994 FR 9406516
(43) Date de publication de la demande: 29.11.1995
(73) Titulaire: VALEO SYSTEMES D'ESSUYAGE, 78320 La Verrière (FR)
(72) Inventeur: Roumegoux, Jean-Louis, F-75116 Paris (FR)
(74) Mandataire: Gamonal, Didier

(56) Documents cités:
- EP-A- 0 311 471
- EP-A- 0 330 458
- EP-A- 0 565 443
- DE-A- 4 017 078
- DE-U- 8 630 990
- GB-A- 1 603 589

## Description

La présente invention concerne un essuie-glace de véhicule automobile.

L'invention concerne plus particulièrement un essuie-glace du type comportant un bras porte-balai, un balai d'essuie-glace et une rampe de lave-glace qui s'étend longitudinalement sur au moins une partie de la longueur du balai d'essuie-glace auquel elle est fixée.

Les rampes de lave-glace sont utilisées en combinaison avec les essuie-glaces afin d'assurer la projection d'un liquide de lave-glace sur la surface à essuyer pour obtenir un bon nettoyage d'une telle surface, notamment lorsque cette dernière est recouverte de salissures ou de poussières.

D'une manière connue, une telle rampe de lave-glace est fixée directement ou indirectement par l'intermédiaire de cavalier de fixation, soit sur les bras d'essuie-glace soit sur les balais d'essuie-glace.

Le document de brevet EP-A-0 311 471 décrit un essuie-glace utilisant ce type de fixation. Dans ce document (notamment en figure 4), la rampe de lave-glace comporte pour son accrochage au balai un moyen central et deux moyens opposés d'extrémité qui coopèrent avec trois points d'accrochage formés en vis-à-vis sur l'essuie-glace.

Ces fixations de rampes de lave-glace présentent néanmoins des inconvénients non négligeables.

En effet, il est nécessaire de disposer d'une multiplicité de cavaliers de fixation en rapport, d'une part, avec la section de la rampe à fixer et, d'autre part, avec les dimensions transversales du bras ou du balai d'essuie-glace, ce qui ne peut que compliquer le montage de cette rampe et augmenter le coût de fabrication d'un essuie-glace équipé de cette rampe.

En outre, les cavaliers sont des pièces, généralement en matière plastique, qui, lors d'une intervention sur l'essuie-glace, peuvent se briser en cas de manipulations non autorisées et entraîner de ce fait un dysfonctionnement de la rampe.

Afin de remédier à ces inconvénients, l'invention propose un essuie-glace pour véhicule automobile du type précité (Essuieglace du type selon EP-A-0 311 471), caractérise en ce que ledit moyen central est une encoche centrale ouverte selon une direction sensiblement perpendiculaire à la vitre à essuyer, en ce que lesdits moyens opposés d'extrémité sont deux encoches qui sont ouvertes selon une direction opposée à celle de l'encoche centrale, et en ce que les encoches coopèrent avec les trois points d'accrochage précités.

Selon des modes de réalisation de l'invention :
- l'essuie-glace comporte une structure de répartition de pression comportant au moins un étrier articulé autour d'un axe d'articulation perpendiculaire à la direction générale du balai d'essuie-glace et une extrémité de l'axe d'articulation fait saillie transversalement en direction de la rampe de lave-glace pour constituer un point d'accrochage central reçu dans l'encoche centrale de la rampe de lave-glace;
- l'encoche centrale présente en section la forme d'un U ouvert en direction de la vitre à essuyer ;
- l'encoche centrale coopère avec un collet radial d'accrochage issu de l'extrémité libre de l'axe d'articulation ;
- la rampe de lave-glace comporte une patte centrale d'accrochage qui fait saillie transversalement en direction du balai d'essuie-glace et dont l'extrémité libre comporte l'encoche centrale ;
- la rampe de lave-glace comporte deux pattes opposées d'extrémités d'accrochage qui font saillie transversalement en direction du balai d'essuie-glace et dont chacune comporte à son extrémité libre une encoche qui coopère avec le bord inférieur d'une joue latérale en vis-à-vis du balai d'essuie-glace ;
- les pattes s'étendent transversalement en saillie depuis une face latérale de la rampe de lave-glace qui s'étend en regard d'une joue latérale en vis-à-vis du balai d'essuie-glace ;
- le balai d'essuie-glace comporte une structure de répartition de pression comportant au moins un étrier central et les pattes opposées d'extrémités coopèrent avec le bord inférieur d'une joue latérale en vis-à-vis de l'étrier central ;
- la rampe de lave-glace est déformable élastiquement selon une direction sensiblement perpendiculaire à la direction longitudinale de la rampe de lave-glace pour permettre son accrochage sur l'essuie-glace.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée illustrant un étrier principal d'un balai d'essuie-glace et une rampe de lave-glace associée réalisés conformément aux enseignements de l'invention ;
- la figure 2 est une vue en perspective avec arrachement partiel illustrant la partie centrale de l'étrier du balai d'essuie-glace et la rampe de lave-glace;
- les figures 3 et 4 sont des vues en section transversale, selon les lignes 3-3 et 4-4 de la figure 1, illustrant la rampe de lave-glace en position montée sur l'étrier central du balai d'essuie-glace ;
- les figures 5 et 6 sont des vues en section transversale d'une variante selon les figures 3 et 4.

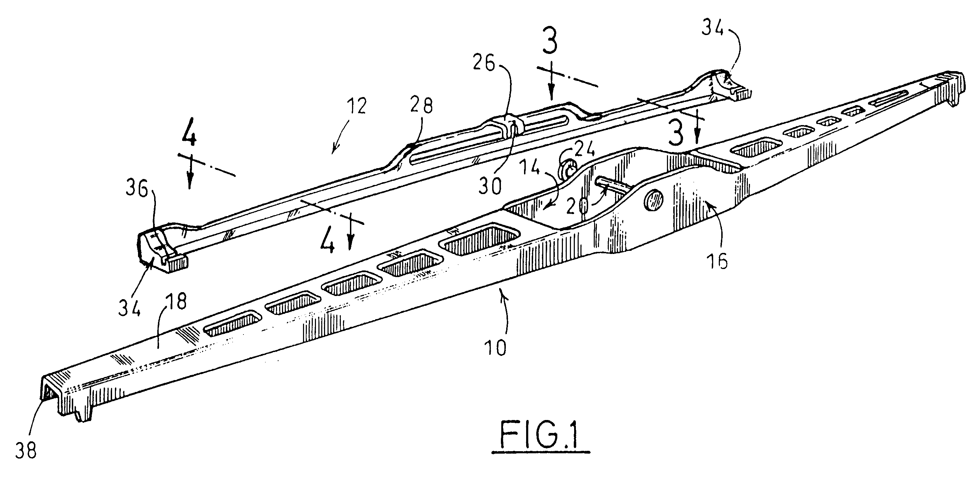

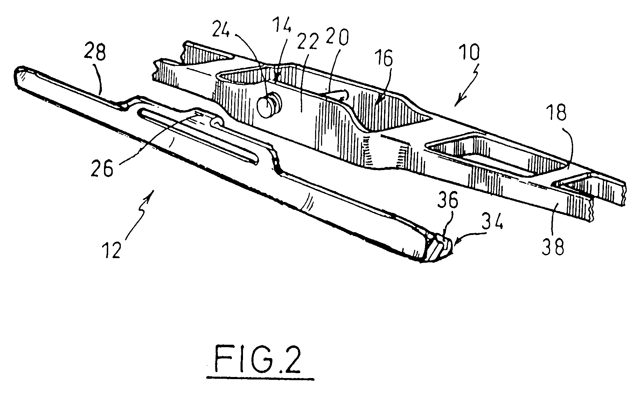

On a illustré sur les figures 1 et 2, un étrier ou palonnier central 10 appartenant à un balai d'essuie-glace qui est équipé d'une rampe de lave-glace 12 munie de buses de pulvérisation 12' d'un liquide de lave-glace.

L'étrier central 10 est prévu pour recevoir de manière articulée, selon une technique connue, plusieurs étriers ou palonniers d'extrémités (non représentés) qui portent une raclette d'essuyage d'une vitre à essuyer.

L'étrier principal 10 comporte deux joues latérales parallèles 14 et 16 qui sont reliées entre elles par un dos longitudinal supérieur ajouré 18.

Dans sa partie centrale, l'étrier principal 10 comporte un axe 20 d'articulation de l'étrier 10 sur l'extrémité d'un bras d'essuie-glace (non représenté) au moyen d'un connecteur d'articulation (non représenté) reçu dans le logement central délimité par les faces internes en vis-à-vis des joues latérales 14 et 16.

Conformément à l'invention, et comme on peut le voir notamment sur la figure 2, l'axe d'articulation 20 fait saillie transversalement au-delà de la face latérale 22 de la joue 14 et comporte un collet radial d'extrémité 24 qui constitue un collet d'accrochage au sens de l'invention.

La rampe de lave-glace 12 est un élément moulé en matière plastique qui est prévu pour s'étendre longitudinalement en regard de l'essuie-glace, et notamment principalement en regard de la face latérale 22 de l'étrier principal 10 du balai d'essuie-glace.

Pour permettre sa fixation par accrochage sur l'étrier 10, la rampe de lave-glace 12 comporte une patte centrale d'accrochage 26 qui s'étend transversalement en saillie depuis la face latérale interne 28 de la rampe de lave-glace 12 qui s'étend en regard de la face latérale 22 de la joue latérale 14 de l'étrier principal 10.

L'extrémité libre 27 de la patte centrale d'accrochage 26 est repliée à 90° selon une direction parallèle au plan de la face 28 et comporte une encoche centrale d'accrochage 30 qui se présente sous la forme d'une encoche en forme de U renversé ouverte vers le bas, c'est-à-dire en direction de la vitre à essuyer, et qui est susceptible de recevoir la portion d'extrémité 32 de l'axe d'articulation 20 qui se termine par le collet radial d'accrochage 24.

La rampe de lave-glace 12 comporte également deux pattes opposées d'extrémités d'accrochage 34.

Les deux pattes d'extrémités 34 sont agencées sensiblement symétriquement de part et d'autre de la patte centrale d'accrochage 26.

Chaque patte d'extrémité 34 est également réalisée venue de matière avec la rampe de lave-glace 12 et s'étend transversalement en saillie depuis la face latérale 28 de cette dernière en direction de la face latérale 22 de la joue latérale 14 de l'étrier principal 10 du balai d'essuie-glace.

Chaque patte d'extrémité 34 comporte, au voisinage de son extrémité libre, une encoche d'accrochage 36 qui est réalisée sous la forme d'une rainure longitudinale et qui est tournée vers le haut, c'est-à-dire qui est ouverte dans la direction opposée à celle de l'encoche centrale d'accrochage 30 formée à l'extrémité libre recourbée 27 de la patte centrale d'accrochage 26.

Chacune des encoches 36 est conformée de manière à recevoir une portion en vis-à-vis du bord longitudinal inférieur 38 de la joue latérale 14 de l'étrier principal 10.

Le montage et la fixation de la rampe de lave-glace 12 sur l'étrier principal 10 s'effectuent très facilement de la manière suivante.

L'opérateur commence par introduire le point d'accrochage central de l'étrier principal 10 constitué par l'extrémité 32 de l'axe d'articulation 20 avec son collet radial 24 dans l'encoche centrale 30 de la rampe de lave-glace 12.

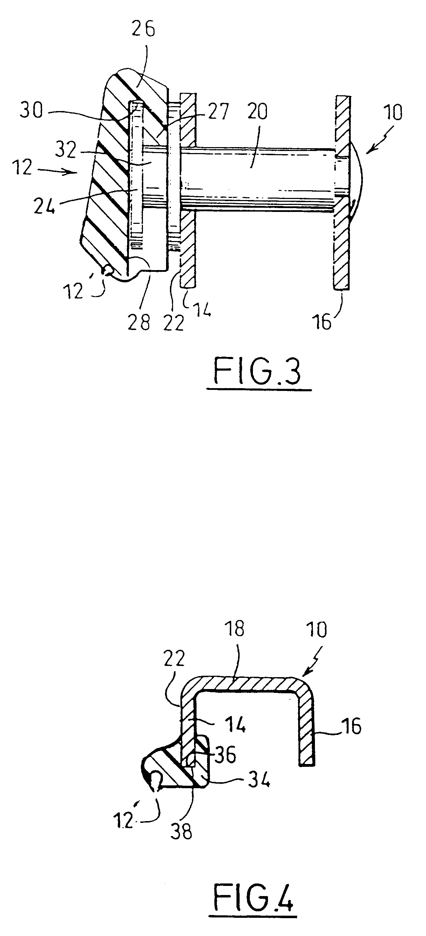

Dans cette position illustrée à la figure 3, la rampe de lave-glace 12 peut pivoter par rapport à l'étrier principal 10 autour de l'axe d'articulation 20.

L'opérateur fait pivoter la rampe de lave-glace 12 dans l'un ou l'autre sens de manière à faire passer l'une des pattes d'extrémités 34 en-dessous du bord inférieur 38 de la joue latérale 14 puis fait pivoter la rampe de lave-glace dans l'autre sens de manière à faire pénétrer le bord inférieur 38 dans l'encoche 36 formée dans cette patte d'accrochage 34.

Du fait de la possibilité pour la rampe de lave-glace 12 d'être déformé élastiquement, notamment si elle est réalisée par moulage en matière plastique, l'opérateur provoque ensuite une déformation élastique de la partie d'extrémité de la rampe de lave-glace 12 qui n'est pas encore accrochée sur l'étrier principal 10 de manière à faire passer la patte d'extrémité d'accrochage 34, qui n'est pas encore accrochée, en dessous du bord inférieur 38 de la joue latérale 14 et à faire pénétrer, sous l'effet de rappel élastique dû à la déformation élastique préalable de la rampe de lave-glace 12, le bord 38 dans l'encoche correspondante 36.

A l'issue de ces opérations, la rampe de lave-glace 12 est montée et verrouillée élastiquement en position sur l'étrier principal 10 par rapport auquel elle est maintenue tant longitudinalement que transversalement et verticalement.

Le démontage éventuel de la rampe de lave-glace 12 s'effectue dans le sens inverse des opérations de montage décrites précédemment.

La conception de l'essuie-glace selon l'invention permet donc de réaliser un montage simple et économique de la rampe de lave-glace 12 sur l'étrier principal 10 du balai d'essuie-glace sans faire appel à des moyens complexes d'accrochage, tels que des cavaliers.

En effet, l'essentiel des moyens d'accrochage est constitué par les pattes 26 et 34 qui sont réalisées venues de matière par moulage avec la rampe de lave-glace 12, la seule modification apportée à l'étrier principal 10, par rapport à un étrier classique, étant constituée par le prolongement 32, 24 de l'axe d'articulation 20.

La présente invention n'est pas limitée aux exemples décrits mais englobe toute variante.

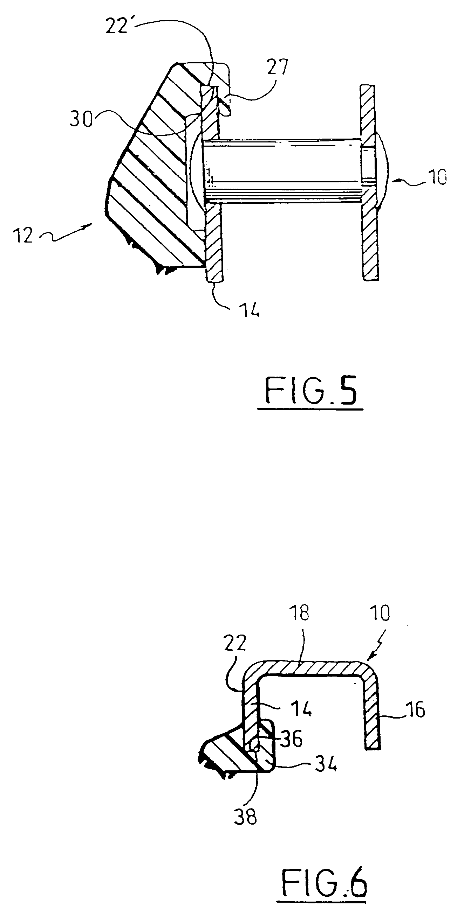

Notamment comme visible sur les figures 5 et 6 les encoches 30 et 36 subsistent toujours mais l'encoche 30, au lieu de coopérer avec un collet radial d'accrochage, coopère avec le bord supérieur 22' de la joue 14 en vis-à-vis.

Le montage de cette rampe s'effectue de la même manière que celle décrite précédemment par accrochage de la partie centrale de la rampe puis par pivotement pour que les encoches 36 coopèrent avec le bord inférieur 38 de la joue 14.

## Revendications

1. Essuie-glace pour véhicule automobile du type comportant un bras porte-balai, un balai d'essuie-glace (10) et une rampe de lave-glace (12) qui s'étend longitudinalement sur au moins une partie de la longueur du balai d'essuie-glace (10) auquel elle est fixée, la rampe de lave-glace (12) comportant pour son accrochage au balai (10) un moyen central et deux moyens opposés d'extrémité qui coopèrent avec trois points d'accrochage (24,38) formés en vis-à-vis sur l'essuie-glace, caractérisé en ce que ledit moyen central est une encoche centrale (30) ouverte selon une direction sensiblement perpendiculaire à la vitre à essuyer, en ce que lesdits moyens opposés d'extrémité sont deux encoches (36) ouvertes selon une direction opposée à celle de l'encoche centrale (30), et en ce que les encoches (30,36) coopèrent avec les trois points d'accrochage (24, 38) précités.

2. Essuie-glace selon la revendication 1, caractérisé en ce que l'encoche centrale (30) présente en section la forme d'un U ouvert en direction de la vitre à essuyer.

3. Essuie-glace selon la revendication 1 ou 2, caractérisé en ce qu'il comporte une structure de répartition de pression comportant au moins un étrier (10) articulé autour d'un axe d'articulation (20) perpendiculaire à la direction générale du balai, et en ce qu'une extrémité (32,24) de l'axe d'articulation (20) fait saillie transversalement en direction de la rampe de lave-glace (12) pour constituer un point d'accrochage central reçu dans l'encoche centrale (30) de la rampe de lave-glace (12).

4. Essuie-glace selon la revendication 2 ou 3, caractérisé en ce que l'encoche centrale (30) coopère avec un collet radial d'accrochage (24) issu de l'extrémité libre (32) de l'axe d'articulation (20).

5. Essuie-glace selon la revendication 2, caractérisé en ce que l'encoche centrale (30) coopère avec le bord supérieur (22') d'une joue latérale (14) en vis-à-vis du balai d'essuie-glace (10).

6. Essuie-glace selon l'une des revendications 2 à 5, caractérisé en ce que la rampe de lave-glace (12) comporte une patte centrale d'accrochage (26,27) qui fait saillie transversalement en direction du balai d'essuie-glace (10) et dont l'extrémité libre (27) comporte l'encoche centrale (30).

7. Essuie-glace selon l'une quelconque des revendications 2 à 6, caractérisé en ce que la rampe de lave-glace (12) comporte deux pattes opposées d'extrémités (34) d'accrochage qui font saillie transversalement en direction du balai d'essuie-glace (10) et dont chacune (34) comporte à son extrémité libre une encoche (36) qui coopère avec le bord inférieur (38) d'une joue latérale en vis-à-vis (14) du balai d'essuie-glace (10).

8. Essuie-glace selon les revendications 6 et 7 caractérisé en ce que lesdites pattes (26,34) s'étendent transversalement en saillie depuis une face latérale (28) de la rampe de lave-glace(12) qui s'étend en regard d'une joue latérale en vis-à-vis (14) du balai d'essuie-glace (10).

9. Essuie-glace selon l'une des revendications 7 ou 8, caractérisé en ce que le balai d'essuie-glace comporte une structure de répartition de pression comportant au moins un étrier central (10), et en ce que lesdites pattes opposées d'extrémités (34) coopèrent avec le bord inférieur (38) d'une joue latérale en vis-à-vis (14) de l'étrier central (10).

10. Essuie-glace selon l'une quelconque des revendications précédentes, caractérisé en ce que la rampe de lave-glace (12) est déformable élastiquement selon une direction sensiblement perpendiculaire à la direction longitudinale générale de la rampe de lave-glace pour permettre son accrochage sur l'essuie-glace.

## Claims

1. A screen wiper for a motor vehicle, of the type comprising a blade-carrying arm, a screen wiper blade (10) and a screen washing ramp (12) which extends longitudinally over at least part of the length of the screen wiper blade (10) to which it is fixed, the washing ramp (12) including, for its clipping attachment to the blade (10), a central means and two opposed end means which cooperate with three clipping points (24, 38) formed in facing relationship with each other on the wiper, characterised in that the said central means is a central notch (30) which is open in a direction substantially at right angles to the glass to be swept, in that the said opposed end means are two notches (36) which are open in a direction opposite to that of the central notch (30), and in that the notches (30, 36) cooperate with the three said clipping points (24, 38).

2. A screen wiper according to Claim 1, characterised in that the central notch (30) has a U-shaped cross section which is open towards the glass to be swept.

3. A screen wiper according to Claim 1 or Claim 2, characterised in that it includes a pressure distributing structure comprising at least one yoke (10) which is articulated about a pivot axis (20) at right angles to the general direction of the blade, and in that one end (32, 24) of the pivot pin (20) projects transversely towards the screen washing ramp (12) so as to constitute a central clipping point received in the central notch (30) of the screen washing ramp (12).

4. A screen wiper according to Claim 2 or Claim 3, characterised in that the central notch (30) cooperates with a radial clipping collar (24) projecting from the free end (32) of the pivot pin (20).

5. A screen wiper according to Claim 2, characterised in that the central notch (30) cooperates with the upper edge (22') of a side portion (14), in facing relationship with it, of the wiper blade (10).

6. A screen wiper according to one of Claims 2 to 5, characterised in that the screen washing ramp (12) includes a central clipping lug (26, 27) which projects transversely towards the screen wiper blade (10), and which has the central notch (30) in its free end (27).

7. A screen wiper according to any one of Claims 2 to 6, characterised in that the screen washing ramp (12) includes two opposed end clipping lugs (34) which project transversely towards the screen wiper blade (10), and each of which (34) has at its free end a notch (36) which cooperates with the lower edge (38) of a side portion (14), in facing relationship with it, of the screen wiper blade (10).

8. A screen wiper according to Claims 6 and 7, characterised in that the said lugs (26, 34) project transversely from a side face (28) of the screen washing ramp (12) which faces towards a side portion (14) of the screen wiper blade (10).

9. A screen wiper according to Claim 7 or Claim 8, characterised in that the screen wiper blade includes a pressure distributing structure comprising at least one central yoke (10), and in that the said opposed end lugs (34) cooperate with the lower edge (38) of a side portion (14), in facing relationship with it, of the central yoke (10).

10. A screen wiper according to any one of the preceding Claims, characterised in that the screen washing ramp (12) is deformable elastically in a direction substantially at right angles to the general longitudinal direction of the screen washing ramp, to enable it to be clipped on the wiper.

## Patentansprüche

1. Scheibenwischer für Kraftfahrzeuge mit einem Scheibenwischerarm, einem Scheibenwischerblatt (10) und einer Scheibenwaschschiene (12), die sich in Längsrichtung zumindest auf einem Teil der Länge des Scheibenwischerblatts (10) erstreckt, an dem sie befestigt ist, wobei die Scheibenwaschschiene (12) für ihr Einhaken am Scheibenwischerblatt (10) ein mittleres Mittel und zwei zueinander entgegengesetzte endseitige Mittel umfaßt, die mit drei Einhakstellen (24, 38) zusammenwirken, die gegenüberliegend am Scheibenwischer ausgebildet sind, **dadurch gekennzeichnet**, daß das besagte mittlere Mittel eine mittlere Ausklinkung (30) ist, die entlang einer Richtung offen ist, die in etwa senkrecht zu der zu wischenden Scheibe verläuft, daß die besagten zueinander entgegengesetzten endseitigen Mittel zwei Ausklinkungen (36) sind, die entlang einer Richtung offen sind, die entgegengesetzt zur Richtung der mittleren Ausklinkung (30) verläuft, und daß die Ausklinkungen (30, 36) mit den drei vorgenannten Einhakstellen (24, 38) zusammenwirken.

2. Scheibenwischer nach Anspruch 1 , **dadurch gekennzeichnet**, daß die mittlere Ausklinkung (30) im Querschnitt die Form eines in Richtung der zu wischenden Scheibe offenen U aufweist.

3. Scheibenwischer nach Anspruch 1 oder 2 , **dadurch gekennzeichnet**, daß er eine Druckverteilungsstruktur enthält, die mindestens einen Bügel (10) umfaßt, der um eine zur allgemeinen Richtung des Scheibenwischerblatts senkrechte Gelenkachse (20) angelenkt ist, und daß ein Ende (32, 24) der Gelenkachse (20) quer in Richtung der Scheibenwaschschiene (12) vorsteht, um eine mittlere Einhakstelle zu bilden, die in der mittleren Ausklinkung (30) der Scheibenwaschschiene (12) aufgenommen ist.

4. Scheibenwischer nach Anspruch 2 oder 3 , **dadurch gekennzeichnet**, daß die mittlere Ausklinkung (30) mit einem radialen Einhakbund (24) zusammenwirkt, der aus dem freien Ende (32) der Gelenkachse (20) herausgearbeitet ist.

5. Scheibenwischer nach Anspruch 2 , **dadurch gekennzeichnet**, daß die mittlere Ausklinkung (30) mit der Oberkante (22') einer gegenüberliegenden Seitenwange (14) des Scheibenwischerblatts (10) zusammenwirkt.

6. Scheibenwischer nach einem der Ansprüche 2 bis 5, **dadurch gekennzeichnet,** daß die Scheibenwaschschiene (12) einen mittleren Einhakansatz (26, 27) umfaßt, der quer in Richtung des Scheibenwischerblatts (10) vorsteht und dessen freies Ende (27) die mittlere Ausklinkung (30) enthält.

7. Scheibenwischer nach einem der Ansprüche 2 bis 6, **dadurch gekennzeichnet,** daß die Scheibenwaschschiene (12) zwei zueinander entgegengesetzte endseitige Einhakansätze (34) umfaßt, die quer in Richtung des Scheibenwischerblatts (10) vorstehen und die jeweils an ihrem freien Ende eine Ausklinkung (36) enthalten, die mit der Unterkante (38) einer gegenüberliegenden Seitenwange (14) des Scheibenwischerblatts (10) zusammenwirkt.

8. Scheibenwischer nach den Ansprüchen 6 und 7, **dadurch gekennzeichnet,** daß sich die besagten Ansätze (26, 34) quer von einer Seitenfläche (28) der Scheibenwaschschiene (12) aus vorstehend erstrecken, die sich gegenüber einer gegenüberliegenden Seitenwange (14) des Scheibenwischerblatts (10) erstreckt.

9. Scheibenwischer nach einem der Ansprüche 7 oder 8, **dadurch gekennzeichnet,** daß das Scheibenwischerblatt eine Druckverteilungsstruktur umfaßt, die mindestens einen mittleren Bügel (10) enthält, und daß die zueinander entgegengesetzten endseitigen Ansätze (34) mit der Unterkante (38) einer gegenüberliegenden Seitenwange (14) des mittleren Bügels (10) zusammenwirken.

10. Scheibenwischer nach einem der vorangehenden Ansprüche, **dadurch gekennzeichnet**, daß die Scheibenwaschschiene (12) entlang einer Richtung elastisch verformbar ist, die in etwa senkrecht zur Längsrichtung der Scheibenwaschschiene verläuft, um ihr Einhaken am Scheibenwischer zu ermöglichen.
